# EUROPÄISCHE PATENTSCHRIFT

(11) **EP 1 211 005 B1**
(45) Veröffentlichungstag und Bekanntmachung des Hinweises auf die Patenterteilung: **13.07.2005**
(21) Anmeldenummer: 01811091.6
(22) Anmeldetag: 13.11.2001
(51) Int. Cl.: B23B 31/107

(54) **Futter**
Chuck
Mandrin

(30) Priorität: 25.11.2000 DE 10058587
(43) Veröffentlichungstag der Anmeldung: 05.06.2002
(73) Patentinhaber: HILTI Aktiengesellschaft, 9494 Schaan (LI)
(72) Erfinder: Ostermeier, Peter, 86911 Diessen (DE); Erdt, Wolfgang, 82152 Martinsried (DE); Ehe, Peter, 6822 Röns (AT); Flock, Marcus, 66636 Tholey (DE)
(74) Vertreter: Wildi, Roland

(56) Entgegenhaltungen:
- US-A- 3 583 715
- US-A- 4 701 083
- US-A- 5 709 393

## Beschreibung

Die Erfindung betrifft eine Vorrichtung zur Übertragung eines Drehmomentes von einem Antriebsgerät auf ein lösbar mit dem Antriebsgerät in Verbindung stehendes Werkzeug gemäss dem Oberbegriff des Patentanspruchs 1.

Bei der Herstellung von Bohrungen in harten Untergründen wie Beton, Gestein oder dergleichen, werden Werkzeuge mit einem rohrförmigen Trägerkörper verwendet, die an ihrem freien Ende mit mehreren Schneidsegmenten versehen sind. Mit Hilfe eines Antriebsgerätes, mit dem das Werkzeug lösbar in Verbindung bringbar ist, wird das Werkzeug in Drehbewegung versetzt. Der Übertragung eines von dem Antriebsgerat erzeugten Drehmomentes auf das Werkzeug dient eine Vorrichtung, die sich aus einer an dem Antriebsgerät angeordneten Werkzeugaufnahme und einem fest mit dem Werkzeug in Verbindung stehenden Einsteckende zusammensetzt. Eine derartige Vorrichtung ist beispielsweise aus der DE-3434076 bekannt.

Das Einsteckende dieser Vorrichtung ist fest mit dem rohrförmigen Trägerkörper verbunden und befindet sich an einem den Schneidsegmenten gegenüberliegenden freien Ende des rohrförmigen Trägerkörpers. An einen sich in Bearbeitungsrichtung konisch erweiternden ersten Bereich des Einsteckendes schliesst sich in Bearbeitungsrichtung zuerst ein zweiter Bereich mit einer umlaufenden Nut, dann ein sich in Bearbeitungsrichtung konisch erweiternder dritter Bereich und anschliessend ein mit einer zylindrischen Aussenkontur versehener vierter Bereich an. Das Einsteckende ist mit drei gleichmässig am Umfang verteilten Nuten versehen, die sich im wesentlichen über alle vier Bereiche erstrecken.

Die Werkzeugaufnahme weist eine sich in Bearbeitungsrichtung konisch erweiternde Aufnahmeöffnung, zwei in die Aufnahmeöffnung ragende, walzenförmig ausgebildete Verriegelungselemente und drei in die Aufnahmeöffnung ragende Drehmitnehmer auf. Die Verriegelungselemente sind mit Hilfe einer parallel zu einer Bearbeitungsrichtung versetzbaren Verriegelungshülse im wesentlichen radial versetzbar.

Beim Einsetzen des Einsteckendes in die Werkzeugaufnahme erfolgt eine Zentrierung und eine dichtende Verklemmung des Einsteckendes in der Werkzeugaufnahme über die konischen Bereiche des Einsteckendes und der Werkzeugaufnahme. Der Sicherung des Einsteckendes in der Aufnahmeöffnung der Werkzeugaufnahme gegen axiales Versetzen dienen die Verriegelungselemente, die in einer Verriegelungsstellung in die Aufnahmeöffnung ragen und in die umlaufende Ausnehmung am Einsteckende greifen. Die Übertragung des Drehmomentes erfolgt über die Drehmitnehmer, die formschlüssig in die Nuten des Einsteckendes eingreifen.

Bei der Übertragung von sehr hohen Drehmomenten ist die Flächenpressung zwischen den Drehmitnehmern und den Nuten sehr hoch. Dies kann zu einer Beschädigung der mit den Nuten in Verbindung stehenden Flanken der Drehmitnehmer führen.

Der Erfindung liegt die Aufgabe zugrunde, die Vorrichtung zur Übertragung eines Drehmomentes dahingehend zu verbessern, dass mit der Vorrichtung trotz Aufrechterhaltung der Führungs-, Zentrier-, Klemm- und Dichtfunktionen zwischen dem Einsteckende und der Werkzeugaufnahme im ersten Bereich des Einsteckendes, sehr hohe Drehmomente übertragen werden können, ohne dass die drehmomentübertragenden Elemente beschädigt werden.

Die Lösung dieser Aufgaben erfolgt mit einer Vorrichtung zur Übertragung eines Drehmomentes, welche die im Patentanspruch 1 angeführten Merkmale aufweist.

Die erfindungsgemässe Drehmitnahmenut ist in jenem Bereich des Einsteckendes angeordnet, wo aufgrund des grossen Durchmessers grosse Drehmomente besonders gut übertragen werden können. Die Drehmitnahmenut, die zusätzlich zu den Nuten an dem Einsteckende angeordnet ist, vergrössert die, der Aufnahme des Drehmomentes dienende, gesamte Angriffsfläche des Einsteckendes. Aufgrund der grösseren Angriffsfläche ergibt sich eine Reduktion der Flächenpressung. Eine Beschädigung der Nuten bzw. der Drehmitnahmenuten wird dadurch verhindert. Dadurch, dass sich die Drehmitnahmenut nur über den dritten und vierten Bereich des Einsteckendes erstreckt, bleibt die im ersten konisch erweiternden Bereich des Einsteckendes vorhandene Kontaktfläche erhalten, der zusammen mit einer entsprechenden Gegenfläche der Werkzeugaufnahme eine Führungs-, Zentrier-, Klemm- und Dichtfunktion zukommt.

Zweckmässigerweise sind der Anzahl der Nuten entsprechende Drehmitnahmenuten vorgesehen, wobei jeweils zwei Nuten einer Drehmitnahmenut in Umfangsrichtung benachbart sind. Mit zunehmender Anzahl von Drehmitnahmenuten wird die gesamte Angriffsfläche des Einsteckendes zunehmend grösser und die Flächenpressung zunehmend verringert.

Eine gleichmässige Verteilung eines auf das Einsteckende einwirkenden Drehmomentes über den Umfang des Einsteckendes wird vorzugsweise dadurch erreicht, dass das Einsteckende drei Nuten aufweist. Diese sind beispielsweise gleichmässig am Umfang des Einsteckendes verteilt angeordnet.

Damit das Einsteckende des Werkzeugs schnell in die Werkzeugaufnahme eingesetzt werden kann, ohne viel Zeit für das Ausrichtung der Nuten und der Drehmitnahmenuten gegenüber entsprechenden Drehmitnehmern der Werkzeugaufnahme zu benötigen, sind zweckmässigerweise die Abstände zwischen jeder Drehmitnahmenut und den benachbarten Nuten gleich gross. Beispielsweise sind drei Nuten und drei Drehmitnahmenuten jeweils zueinander unter einem Winkel von 60° angeordnet, wobei jeweils ein zwischen der Drehmitnahmenut und der Nut liegender Winkel beispielsweise 30° beträgt.

Damit die gesamte Angriffsfläche an dem Einsteckende möglichst gross ist, sind die Nuten und die Drehmitnahmenuten vorzusweise in der Weise ausgebildet, dass die Erstreckung jeder Drehmitnahmenut in Umfangsrichtung des Einsteckendes der 0,3 - bis 0,8-fachen Erstreckung der Nuten und die in radialer Richtung gemessene Tiefe der Drehmitnahmenut der 0,3- bis 0,6- fachen Tiefe der Nuten entsprechen.

Das mit einem rohrförmigen Trägerkörper in Verbindung stehende Einsteckende weist in einem Übergangsbereich zum Trägerkörper eine flanschartige Erweiterung auf, deren Aussendurchmesser beispielsweise dem Aussendurchmesser des rohrförmigen Trägerkörpers entspricht.

Unter bestimmten Bedingungen, wenn den Drehmitnahmenuten zusätzlich eine Codierfunktion zukommt, ist es von Vorteil, wenn der Winkel zwischen den einander benachbarten Nuten und/oder die Tiefe der Nuten und/oder die Erstreckung der Nuten in Umfangsrichtung unterschiedlich gross sind. Mit Hilfe einer derartigen Codierfunktion können beispielsweise Werkzeuge mit unterschiedlich grossen Durchmessern unterschiedlich starken Antriebsgeräten zugeordnet werden, so dass beispielsweise in ein Antriebsgerät mit geringer Antriebsleistung nur Werkzeuge einsetzbar sind, die einen kleinen Durchmesser aufweisen.

Damit das zu übertragende Drehmoment gleichmässig auf den gesamten Umfang des Einsteckendes übertragen werden kann, weist die Werkzeugaufnahme zweckmässigerweise der Anzahl der Drehmitnehmer entsprechende, zusätzliche Mitnehmer auf, wobei jeweils zwei Drehmitnehmer einem zusätzlichen Mitnehmer in Umfangsrichtung benachbart sind.

Ein schnelles Einsetzen des Einsteckendes in die Werkzeugaufnahme, ohne grossen Aufwand für das Ausrichten des Einsteckendes gegenüber der Werkzeugaufnahme, wird beispielsweise dadurch erreicht, indem vorteilhafterweise die Abstände zwischen jedem zusätzlichen Mitnehmer und den benachbarten Drehmitnehmern gleich gross sind. Aufgrund dieser gleichmässigen Verteilung der Drehmitnehmer und der zusätzlichen Mitnehmer ist das Einsteckende nur um einen kleinen Winkelbetrag zu verdrehen, bis sich die Drehmitnehmer und die Nuten bzw. die zusätzlichen Mitnehmer und die Drehmitnahmenuten überdecken.

Damit mit der Werkzeugaufnahme ein möglichst grosses Drehmoment auf das Einsteckende übertragbar ist, entspricht die Erstreckung jedes zusätzlichen Mitnehmers in Umfangsrichtung der Werkzeugaufnahme vorzugsweise der 0,3- bis 0,8-fachen Erstreckung der Drehmitnehmer und die in radialer Richtung gemessene Höhe der zusätzlichen Mitnehmer der 0,3- bis 0,6-fachen Höhe der Drehmitnehmer.

Die Länge der zusätzlichen Mitnehmer entspricht im wesentlichen der Länge der Drehmitnahmenuten.

Die Erfindung wird anhand von Zeichnungen, die ein Ausführungsbeispiel wiedergeben, näher erläutert. Es zeigen:
- Fig.1: eine erfindungsgemässe Werkzeugaufnahme in geschnittener Darstellung;
- Fig. 2: eine Ansicht der Werkzeugaufnahme gemäss Pfeil II in Fig. 1;
- Fig. 3: ein erfindungsgemässes Werkzeug zum Einsetzen in eine Werkzeugaufnahme gemäss Fig. 1 in der Seitenansicht; teilweise geschnitten;
- Fig.4: eine Draufsicht auf ein Einsteckende des Werkzeuges gemäss Fig. 3.

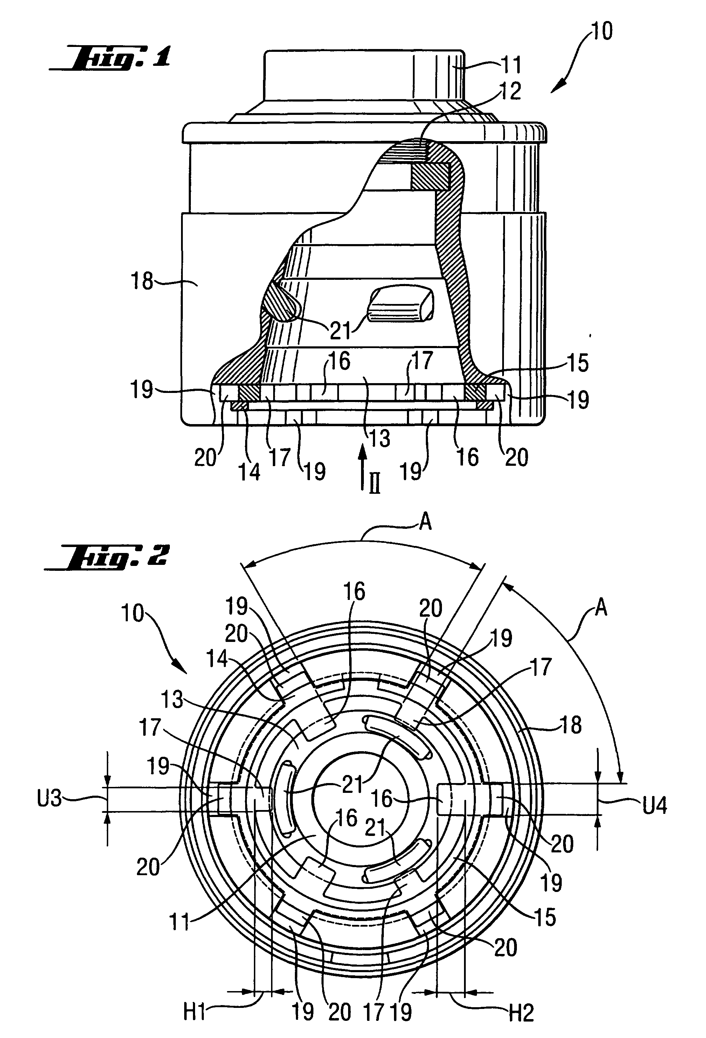

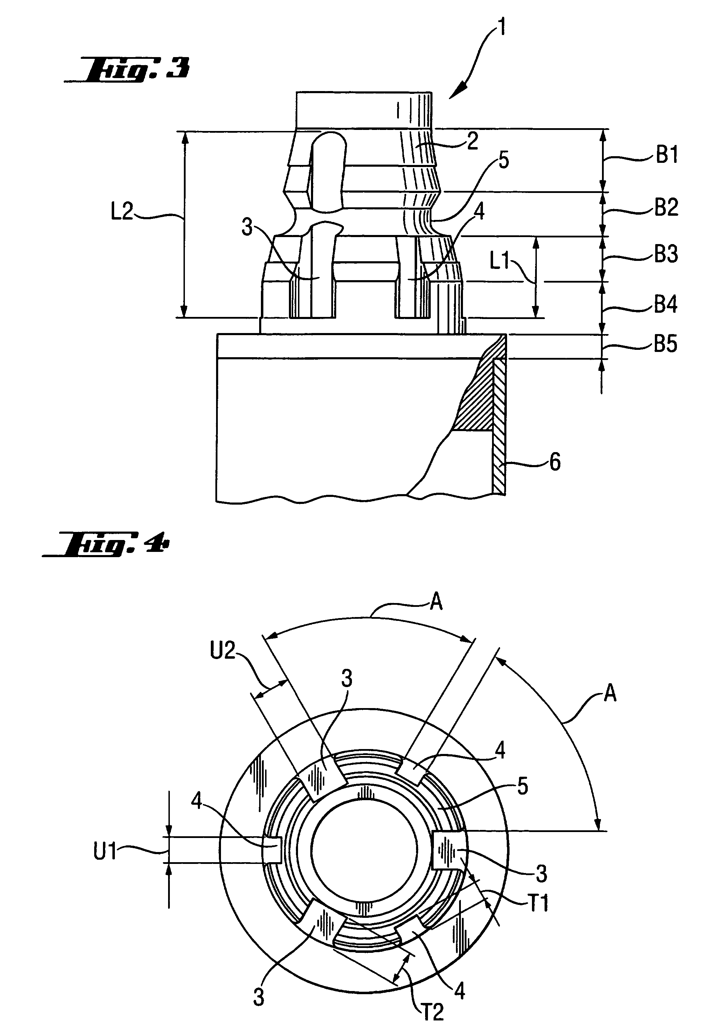

Die in den Fig. 1 und 2 dargestellte Werkzeugaufnahme 10 sowie das Einsteckende 2 des in den Fig. 3 und 4 abgebildeten Werkzeugs 1 bilden eine Vorrichtung, mit deren Hilfe eine von einem nicht vollständig dargestellten Antriebsgerät erzeugte Drehbewegung auf das lösbar mit dem Antriebsgerät in Verbindung bringbaren Werkzeug 1 übertragbar ist.

Die Werkzeugaufnahme 10 weist einen hülsenförmigen Grundkörper 11 mit einer zentralen Durchgangsbohrung und einem Innengewinde 12 auf. Dieses Innengewinde 12 befindet sich an einem von der Bearbeitungsrichtung abgewandten Endbereich des Grundkörpers 11 und dient der Verbindung der Werkzeugaufnahme 10 mit einer nicht dargestellten Antriebswelle des Antriebsgerätes.

Ein bearbeitungsrichtungsseitiger Abschnitt der Durchgangsbohrung erweitert sich in Bearbeitungsrichtung im wesentlichen konisch und bildet eine Aufnahmeöffnung 13, die der Aufnahme sowie der Führung des Einsteckendes 2 dient. Zwischen einer in Bearbeitungsrichtung weisenden Mündung der Aufnahmeöffnung 13 und dem in Bearbeitungsrichtung weisenden Ende des Grundkörpers 11 befindet sich ein Drehmitnahmebereich, der der Festlegung einer Drehmitnahmescheibe 15 dient. Dieser Drehmitnahmebereich weist mehrere Vertiefungen 19 auf, die im Umfangsbereich einer grössten lichten Weite der Aufnahmeöffnung 13 beispielsweise gleichmässig verteilt angeordnet und zu einer in Bearbeitungsrichtung weisenden Stirnseite der Werkzeugaufnahme 10 offen ausgebildet sind. Jede dieser Vertiefungen 19 dient der Aufnahme einer von mehreren Drehmitnahmezungen 20 der Drehmitnahmescheibe 15. Der axialen Festlegung der Drehmitnahmescheibe 15 an der Werkzeugaufnahme 10 dient ein Sicherungsring 14, der in einen umlaufenden Hinterschnitt ragt, der an einer Innenkontur des Drehmitnahmebereiches angeordnet ist. Der parallel zur Bearbeitungsrichtung gemessene Abstand dieses umlaufenden Hinterschnittes von der Mündung der Aufnahmeöffnung 13 entspricht wenigstens der Stärke der Drehmitnahmescheibe 15.

Der Grundkörper 11 ist von einer Verriegelungshülse 18 umgeben, die gegenüber dem Grundkörper 11 parallel zur Bearbeitungsrichtung versetzbar ist. Im Bereich der Aufnahmeöffnung 13 weist die Werkzeugaufnahme 10 drei im wesentlichen radial versetzbare, mit der Verriegelungshülse 18 zusammenwirkende Verriegelungselemente 21 auf, die am Umfang des Grundkörpers gleichmässig verteilt angeordnet sind. Mit Hilfe der Verriegelungshülse 18 sind diese Verriegelungselemente 21 von einer Ausgangsstellung, in der sie nicht in die Aufnahmeöffnung 13 ragen, in eine Verriegelungsstellung schwenkbar bzw. verschiebbar, in der sie in die Aufnahmeöffnung 13 ragen und dort formschlüssig mit einer umlaufenden Ausnehmung 5 am Einsteckende 2 zusammenwirken.

Das in den Fig. 3 und 4 dargestellte Werkzeug 1 setzt sich beispielsweise aus dem bereits erwähnten Einsteckende 2 und einem rohrförmigen Trägerkörper 6, sowie mehreren, nicht dargestellten Schneidelementen zusammen, die an einem bearbeitungsrichtungsseitigen freien Ende des Trägerkörpers 6 angeordnet sind. Das Einsteckende 2 weist einen sich in Bearbeitungsrichtung konisch erweiternden ersten Bereich B1 auf, an den sich in Bearbeitungsrichtung in folgender Reihenfolge wenigstens ein zweiter Bereich B2 mit einer umlaufenden Ausnehmung 5, ein sich in Bearbeitungsrichtung konisch erweiternder dritter Bereich B3 und ein zylindrischer Bereich B4 anschliesst, wobei das Einsteckende 2 mit drei sich längs der Werkzeugachse erstreckenden Nuten 3 versehen ist die sich wenigstens über alle vier Bereiche B1, B2, B3, B4 erstrecken. In die umlaufende Ausnehmung 5 können die Verriegelungselemente 21 der Werkzeugaufnahme 10 formschlüssig eingreifen und das Einsteckende 2 in der Aufnahmeöffnung 13 der Werkzeugaufnahme 10 axial festlegen.

Das Einsteckende 2 weist zusätzlich zu den drei Nuten 3 drei Drehmitnahmenuten 4 auf, die in gleichen Abständen A voneinander am Umfang des Einsteckendes 2, bzw. unter gleichen Winkeln angeordnet sind. Die Nuten 3 mit einer Länge L2 erstrecken sich über alle vier Bereiche B1, B2, B3, B4 des Einsteckendes 2. Die Drehmitnahmenuten 4 mit einer Länge L1 erstrecken sich hingegen nur über den gesamten konischen, dritten Bereich B3 und über den zylindrischen vierten Bereich B4, dessen Durchmesser im wesentlichen gleich gross ist wie der grösste Durchmesser des konischen dritten Bereiches B3. Ein sich in Bearbeitungsrichtung an den vierten Bereich B4 anschliessender fünfter Bereich B5 wird von einer flanschartigen Erweiterung gebildet, die direkt mit dem rohrförmigen Trägerkörper 6 des Werkzeugs 1 in Verbindung steht. Der Durchmesser der flanschartigen Erweiterung entspricht im wesentlichen dem Aussendurchmesser des rohrförmigen Trägerkörpers 6.

Die sich senkrecht zur Bearbeitungsrichtung erstreckenden Querschnittsflächen der Nuten 3 und der Drehmitnahmenuten 4 sind unterschiedlich gross ausgebildet. So sind beispielsweise die Tiefe T2 und die Erstreckung U2 der Nuten 3 grösser als sie Tiefe T1 und die Erstreckung U1 der Drehmitnahmenuten 4. Die in dem Drehmitnahmebereich der Werkzeugaufnahme 10 festgelegte Drehmitnahmescheibe 15 weist auf die Nuten 3 abgestimmte Drehmitnehmer 16 mit einer Höhe H2 sowie einer Erstreckung U4 in Umfangsrichtung der Werkzeugaufnahme 10 und auf die Drehmitnahmenuten 4 abgestimmte zusätzliche Mitnehmer 17 mit einer Höhe H1 auf, die in die axiale Projektionsfläche der Aufnahmeöffnung 13 in der Werkzeugaufnahme 10 ragen. Die Erstreckung U3 der zusätzlichen Mitnehmer 17 in Umfangsrichtung der Werkzeugaufnahme 10 entspricht der 0,3 bis 0,8-fachen Erstreckung U4 der Drehmitnehmer 16.

## Patentansprüche

1. Vorrichtung zur Übertragung eines Drehmomentes von einem Antriebsgerät auf ein lösbar mit dem Antriebsgerät in Verbindung stehendes, der materialabtragenden Bearbeitung eines Untergrundes dienendes Werkzeug (1), wobei das Werkzeug (1) ein formschlüssig mit einer Werkzeugaufname (10) des Antriebsgerätes in Verbindung stehendes Einsteckende (2) aufweist, das einen sich in Bearbeitungsrichtung konisch erweiternden ersten Bereich (B1) aufweist, an den sich in Bearbeitungsrichtung ein zweiter Bereich (B2) mit einer umlaufenden Nut (5) und daran sich in Bearbeitungsrichtung ein konisch erweiternder dritter Bereich (B3) sowie ein zylindrischer, vierter Bereich (B4) anschliesst, wobei das Einsteckende (2) mit wenigstens zwei sich längs der Werkzeugachse erstreckende Nuten (3) versehen ist die sich über alle vier Bereiche (B1, B2, B3, B4) erstrecken und die Werkzeugaufnahme (10) eine sich in Bearbeitungsrichtung konisch erweiternde Aufnahmeöffnung (13), wenigstens ein in die Aufnahmeöffnung (13) ragendes Verriegelungselement (21), sowie wenigstens zwei in die Aufnahmeöffnung (13) ragende Drehmitnehmer (16) aufweist, die drehschlüssig mit den Nuten (3) des Einsteckendes (2) in Verbindung stehen, **dadurch gekennzeichnet, dass** das Einsteckende (2) nur im dritten Bereich (B3) und im vierten Bereich (B4) wenigstens eine Drehmitnahmenut (4) aufweist in welche zusätzliche Mitnehmer (17) der Werkzeugaufnahme (10) eingreifen.

2. Vorrichtung nach Anspruch 1, **dadurch gekennzeichnet, dass** der Anzahl der Nuten (3) entsprechende Drehmitnahmenuten (4) vorgesehen sind, wobei jeweils zwei Nuten (3) einer Drehmitnahmenut (4) in Umfangsrichtung benachbart sind.

3. Vorrichtung nach Anspruch 1 oder 2, **dadurch gekennzeichnet, dass** drei Nuten (3) vorgesehen sind.

4. Vorrichtung nach einem der Ansprüche 1 bis 3, **dadurch gekennzeichnet, dass** die Abstände (A) zwischen jeder Drehmitnahmenut (4) und den benachbarten Nuten (3) gleich gross ist.

5. Vorrichtung nach einem der Ansprüche 1 bis 4, **dadurch gekennzeichnet, dass** die Erstreckung (U1) jeder Drehmitnahmenut (4) in Umfangsrichtung des Einsteckendes (2) der 0,3 - bis 0,8-fachen Erstreckung (U2) der Nuten (3) entspricht.

6. Vorrichtung nach einem der Ansprüche 1 bis 5, **dadurch gekennzeichnet, dass** die in radialer Richtung gemessene Tiefe (T1) der Drehmitnahmenut (4) der 0,3- bis 0,6- fachen Tiefe (T2) der Nuten (3) entspricht.

7. Vorrichtung nach einem der Ansprüche 1 bis 6, **dadurch gekennzeichnet, dass** die Werkzeugaufnahme (10) der Anzahl der Drehmitnehmer (16) entsprechende zusätzliche Mitnehmer (17) aufweist, wobei jeweils zwei Drehmitnehmer (16) einem zusätzlichen Mitnehmer (17) in Umfangsrichtung benachbart sind.

8. Vorrichtung nach Anspruch 7, **dadurch gekennzeichnet, dass** die Abstände (A) zwischen jedem zusätzlichen Mitnehmer (17) und den benachbarten Drehmitnehmern (16) gleich gross sind.

9. Vorrichtung nach Anspruch 7 oder 8, **dadurch gekennzeichnet, dass** die Erstreckung (U3) jedes zusätzlichen Mitnehmers (17) in Umfangsrichtung der Werkzeugaufnahme (10) der 0,3- bis 0,8-fachen Erstreckung (U4) der Drehmitnehmer (16) entspricht.

10. Vorrichtung nach einem der Ansprüche 7 bis 9, **dadurch gekennzeichnet, dass** die in radialer Richtung gemessene Höhe (H1) der zusätzlichen Mitnehmer (17) der 0,3- bis 0,6-fachen Höhe (H2) der Drehmitnehmer (16) entspricht.

## Claims

1. Device for transferring torque from a drive means to a tool (1) that is in releasable connection with the drive means and that serves for material removing working operations upon a substrate; the tool (1) having an insertion end (2) that is connected with positive engagement with a tool receiving means (10) of the drive means; the insertion end (2) having a first region (B1) that widens conically in the working direction, adjoined in the working direction by a second region (B2) that has a circumferential groove (5), itself adjoined by a third region (B3) that widens conically in the working direction, that is adjoined by a cylindrical fourth region (B4), the insertion end (2) being provided with at least two grooves (3) extending in the same direction as the tool axis and extending along all four regions (B1, B2, B3, B4); and the tool receiving means (10) having a receiving aperture (13) that widens conically in the working direction, at least one locking element (21) projecting into the receiving aperture (13) and at least two rotation entrainment members (16) projecting into the receiving aperture (13) and in rotation fast connection with the grooves (3) of the insertion end (2); **characterised in that** the insertion end (2) has at least one rotation entrainment groove (4) only in the third region (B3) and in the fourth region (B4) in which engage additional entrainment members (17) of the tool receiving means (10).

2. Device according to claim 1, **characterised in that** rotation entrainment grooves (4) are provided corresponding to the number of grooves (3), in each case two grooves (3) being neighbours to one rotation entrainment groove (4) as seen in the circumferential direction.

3. Device according to claim 1 or 2, **characterised in that** three grooves (3) are provided.

4. Device according to one of the claims 1 to 3, **characterised in that** the distances (A) between each rotation entrainment groove (4) and the neighbouring grooves (3) are of equal magnitude.

5. Device according to one of the claims 1 to 4, **characterised in that** the extent (U1) of each rotation entrainment groove (4) in the circumferential direction of the insertion end (2) corresponds to 0.3 to 0.8 times the extent (U2) of the grooves (3).

6. Device according to one of the claims 1 to 5, **characterised in that** the depth (T1) of the rotation entrainment groove (4) measured in the radial direction corresponds to 0.3 to 0.6 times the depth (T2) of the grooves (3).

7. Device according to one of the claims 1 to 6, **characterised in that** the tool receiving means (10) has additional entrainment members (17) corresponding to the number of rotation entrainment members (16), in each case two rotation entrainment members (16) being neighbours to one additional entrainment member (17) as seen in the circumferential direction.

8. Device according to claim 7, **characterised in that** the distances (A) between each additional entrainment member (17) and the neighbouring rotation entrainment members (16) are of equal magnitude.

9. Device according to claim 7 or 8, **characterised in that** the extent (U3) of each additional entrainment member (17) in the circumferential direction of the tool receiving means (10) corresponds to 0.3 to 0.8 times the extent (U4) of the rotation entrainment members (16).

10. Device according to one of the claims 7 to 9, **characterised in that** the height (H1) of the additional entrainment members (17) measured in the radial direction corresponds to 0.3 to 0.6 times the height (H2) of the rotation entrainment members (16).

## Revendications

1. Dispositif pour la transmission d'un couple d'un appareil d'entraînement à un outil (1) relié de manière détachable à l'appareil d'entraînement servant au travail par enlèvement de matière d'un support, l'outil (1) comportant une extrémité insérable (2), laquelle est reliée par complémentarité de formes à un mandrin d'outil (10) de l'appareil d'entraînement et comporte une première zone (B1) qui s'élargit de manière conique dans la direction de travail et à laquelle se raccordent, dans la direction de travail, une deuxième zone (B2) avec une rainure périphérique (5) suivie, dans la direction de travail, d'une troisième zone s'élargissant de manière conique (B3) et d'une quatrième zone cylindrique (B4), l'extrémité insérable (2) étant pourvue d'au moins deux rainures (3) qui s'étendent suivant l'axe de l'outil et qui traversent les quatre zones (B1, B2, B3, B4), le mandrin d'outil (10) étant pourvu d'un orifice récepteur (13) s'élargissant de manière conique dans la direction de travail, d'au moins un élément de verrouillage (21) en saillie dans l'orifice récepteur (13) et d'au moins deux moyens d'entraînement en rotation (16) qui font saillie dans l'orifice récepteur (13) et qui sont solidaires en rotation avec les rainures (3) de l'extrémité insérable (2), **caractérisé en ce que**, seulement dans la troisième zone (B3) et dans la quatrième zone (B4), l'extrémité insérable (2) est pourvue d'au moins une rainure d'entraînement en rotation (4) dans laquelle pénètrent des moyens d'entraînement supplémentaires (17) du mandrin d'outil (10).

2. Dispositif selon la revendication 1, **caractérisé en ce que** le nombre de rainures d'entraînement en rotation (4) prévues correspond à celui des rainures (3), deux rainures (3) étant voisines à chaque fois d'une rainure d'entraînement en rotation (4) dans la direction circonférentielle.

3. Dispositif selon la revendication 1 ou 2, **caractérisé en ce qu'**il est prévu trois rainures (3).

4. Dispositif selon une des revendications 1 à 3, **caractérisé en ce que** les distances (A) entre chaque rainure d'entraînement en rotation (4) et les rainures voisines (3) sont égales.

5. Dispositif selon une des revendications 1 à 4, **caractérisé en ce que** l'extension (U1) de chaque rainure d'entraînement en rotation (4) dans la direction circonférentielle de l'extrémité insérable (2) correspond à 0,3 à 0,8 fois l'extension (U2) des rainures (3).

6. Dispositif selon une des revendications 1 à 5, **caractérisé en ce que** la profondeur (T1) de la rainure d'entraînement en rotation (4) mesurée dans la direction radiale correspond à 0,3 à 0,6 fois la profondeur (T2) des rainures (3).

7. Dispositif selon une des revendications 1 à 6, **caractérisé en ce que** le mandrin d'outil (10) comporte des moyens d'entraînement supplémentaires (17) correspondant en nombre aux moyens d'entraînement en rotation (16), deux moyens d'entraînement en rotation (16) étant voisins à chaque fois d'un moyen d'entraînement supplémentaire (17).

8. Dispositif selon la revendication 7, **caractérisé en ce que** les distances (A) entre chaque moyen d'entraînement supplémentaire (17) et les moyens d'entraînement en rotation voisins (16) sont identiques.

9. Dispositif selon la revendication 7 ou 8, **caractérisé en ce que** l'extension (U3) de chaque moyen d'entraînement supplémentaire (17) dans la direction circonférentielle du mandrin d'outil (10) correspond à 0,3 à 0,8 fois l'extension (U4) des moyens d'entraînement en rotation (16).

10. Dispositif selon une des revendications 7 à 9, **caractérisé en ce que** la hauteur (H1) des moyens d'entraînement supplémentaires (17) mesurée dans la direction radiale correspond à 0,3 à 0,6 fois la hauteur (H2) des moyens d'entraînement en rotation (16).
